# EUROPÄISCHE PATENTSCHRIFT

(11) **EP 0 906 517 B1**
(45) Veröffentlichungstag und Bekanntmachung des Hinweises auf die Patenterteilung: **10.11.1999**
(21) Anmeldenummer: 97922842.6
(22) Anmeldetag: 15.04.1997
(51) Int. Cl.: F16C 33/20, F16C 17/12

(54) **GLEITLAGER**
PLAIN BEARING
PALIER LISSE

(30) Priorität: 20.04.1996 DE 19615824
(43) Veröffentlichungstag der Anmeldung: 07.04.1999
(73) Patentinhaber: IGUS SPRITZGUSSTEILE FÜR DIE INDUSTRIE GmbH, D-51147 Köln (DE)
(72) Erfinder: BLASE, Frank, D-51429 Bergisch Gladbach (DE)
(74) Vertreter: Patentanwälte Lippert, Stachow, Schmidt & Partner
(86) Internationale Anmeldenummer: DE9700769
(87) Internationale Veröffentlichungsnummer: WO9740281

(56) Entgegenhaltungen:
- EP-A- 0 377 523
- DE-A- 4 210 681
- FR-A- 2 537 674
- US-A- 3 194 615
- US-A- 3 451 705
- US-A- 3 771 846

## Beschreibung

Die Erfindung betrifft ein Gleitlager zur Lagerung von Wellen und dergleichen mit einem Lagerkörper aus Kunststoff und einem den Lagerkörper stützenden Gehäuse, wobei das Gleitlager die Welle im wesentlichen vollumfänglich umschließt, und der Lagerkörper einen sich über dessen gesamte axiale Ausdehnung erstreckenden Schlitz und mindestens einen sich ebenfalls über die gesamte axiale Ausdehnung erstreckenden deformierbaren Bereich aufweist, der eine Öffnung des Schlitzes ermöglicht, so daß der Lagerkörper im wesentlichen in radialer Richtung zur Welle auf diese aufbringbar und von dieser entfernbar ist, wobei Mittel zur verdreh- und verschiebungssicheren Festlegung vorgesehen sind.

Bei Gleitlagern mit Kunststofflagerkörper ist der die Welle vollumfänglich umgebende Lagerkörper oftmals einteilig ausgeführt. Ist der Lagerkörper aufgrund von Verschleiß oder sonstigen Beschädigungen auszutauschen, so ist die Welle mit dem Gleitlager vollständig zu demontieren, damit der Lagerkörper in axialer Richtung der Welle von dieser abgezogen werden kann. Anschließend ist der neue Lagerkörper in axialer Richtung auf die Welle aufzuschieben und die Welle erneut vollständig zu montieren und zu justieren. Eine derartige Vorgehensweise ist insbesondere bei Wellen, die mehrfach gelagert sind und deren Lager nur schwierig zu demontieren sind, überaus mühsam und zeitaufwendig.

Des weiteren ist aus der US 3,771,846 ein Gleitlager mit einem Lagerkörper bekannt, der einen sich über dessen gesamte axiale Ausdehnung erstreckenden Schlitz und mehrere deformierbare Bereiche aufweist, so daß der Lagerkörper im wesentlichen in radialer Richtung zur Welle auf diese aufbringbar und von dieser entfernbar ist. Zur Festlegung des Lagerkörpers sind auf dessen Innenseite radial einwärts vorspringende Zapfen vorgesehen, die in korrespondierende Öffnungen der Welle eingreifen, auf die der Lagerkörper aufgeschoben wird. Die Montage dieses Lagerkörpers ist jedoch vergleichsweise mühsam, da zur Festlegung des Lagerkörpers die Zapfen im wesentlichen in Deckung mit den Öffnungen gebracht werden müssen, ohne daß die Öffnungen dabei dem Monteur sichtbar sind.

Aus der DE 42 10 681 A1 ist ein Gleitlager bekannt, welches einen getrennten Einpreßbereich und Gleitbereich aufweist, so daß das Gleitlager von dem Einpreßbereich im Preßsitz von einem korrespondierenden Bauteil gehalten wird. Hierdurch ist zwar eine einfache Befestigung des Gleitlagers möglich, durch die Halterung im Preßsitz kann das Gleitlager jedoch nur begrenzten Kräften ausgesetzt werden, die eine Verschiebung oder Verdrehung des Gleitlagers bewirken können.

Die EP 0 377 523 A1 offenbart ein Gleitlager, welches jedoch lediglich mittels einer Umfangsrippe in einer korrespondierenden Ausnehmung eines Gehäuses befestigt wird, so daß eine verdrehsichere Festlegung des Gleitlagers nicht möglich ist.

Des weiteren sind aus der US 3,451,705, der US 3,194,615 sowie der FR 2 537 674 Gleitlager mit Lagerkörpern bekannt, die in radialer Richtung auf eine Welle aufgeschoben werden können. Die Lagerkörper weisen jedoch keinerlei Befestigungsmittel auf, so daß an der jeweiligen Konstruktion separate Bauteile vorzusehen sind, um den Lagerkörper festzulegen.

Aufgabe der Erfindung ist es, ein Gleitlager mit Mitteln zur verdreh- und verschiebungssicheren Befestigung zu schaffen, dessen Montage wesentlich vereinfacht ist.

Erfindungsgemäß wird die Aufgabe dadurch gelöst, daß die Mittel zur verdrehsicheren und die Mittel zur verschiebungssicheren Festlegung des Lagerkörpers so ausgebildet sind, daß zunächst eines derselben und nachfolgend hierzu das andere betätigbar ist, die Mittel zur Festlegung des Lagerkörpers also in beliebiger Reihenfolge nacheinander betätigbar sind.

Zur Montage des Lagerkörpers kann dieser somit beispielsweise zunächst verdrehsicher montiert werden, wodurch sich eine gewisse Führung für den Lagerkörper ergibt, wobei daran anschließend die verschiebungssichere und endgültige Montage des Lagerkörpers erfolgt.

Die Montage kann dabei im Einzelnen derart erfolgen, daß das den Lagerkörper stützende Gehäuse axial auf der Welle verschoben wird, so daß der Lagerkörper zugänglich ist, und anschließend der Lagerkörper unter Öffnung des Schlitzes in radialer Richtung von der Welle entfernt wird. Die Welle kann hierbei weiterhin von den übrigen vorgesehenen Lagern gehaltert werden und ist zur Entfernung des beschädigten Lagerkörpers nicht zu demontieren. Der neue Lagerkörper kann mit entsprechend weit geöffnetem Schlitz wiederum in radialer Richtung auf die Welle aufgebracht werden und nach Schließen des Schlitzes, gegebenenfalls unter axialer Verschiebung auf der Welle, in dem Gehäuse auf einfache Weise montiert werden.

Vorteilhafte Ausführungsformen des erfindungsgemäßen Gleitlagers ergeben sich aus den Unteransprüchen.

Das Öffnen und Schließen des Schlitzes wird durch den sich über die gesamte axiale Ausdehnung des Lagerkörpers erstrekkenden deformierbaren Bereich ermöglicht. Die Deformierbarkeit des Bereiches kann dadurch erzeugt werden, daß der deformierbare Bereich eine geringere Wandstärke aufweist als der die Welle lagernde Bereich des Lagerkörpers. Dieser Bereich kann beispielsweise als Filmscharnier ausgebildet sein, wobei das "Filmscharnier auch Durchbrechungen aufweisen kann. Das Filmscharnier kann im montierten Zustand des Gleitlagers ebenfalls an der Welle anliegen oder bei entsprechender Wandstärke des Lagerkörpers auch von dieser beabstandet sein.

Der Lagerkörper und der oder die deformierbaren Bereiche können auch aus Materialien mit unterschiedlichen Elastizitätsmodulen bestehen. Der Bereich, der eine Abwinklung der sich beidseitig an ihn angrenzenden Bereiche des Lagerkörpers gegeneinander ermöglicht, so daß der Schlitz geöffnet und geschlossen werden kann, kann einstückig mit den angrenzenden Bereichen des Lagerkörpers verbunden, beispielsweise verklebt oder angespritzt, sein.

Als deformierbarer Bereich im Sinne der vorliegenden Erfindung ist auch ein geschlitzter Bereich aufzufassen, so daß der Lagerkörper beispielsweise im wesentlichen aus zwei voneinander separierbaren Halbschalen besteht, die zu einem Lagerkörper zusammensetzbar sind. Hierbei können entsprechende Mittel vorgesehen sein, die eine Verschiebung der Halbschalen gegeneinander verhindern. So können bei entsprechender Wandstärke des Lagerkörpers an den gegenüberliegenden, sich in axialer Richtung des Lagerkörpers erstreckenden Stirnseiten korrespondierende Zapfen und Ausnehmungen angeordnet sein. Die Schmalseiten der zwei oder mehreren den Lagerkörper bildenden Segmente können auch mit einer Verzahnung oder dergleichen versehen sein, die eine Verschiebung der Segmente gegeneinander verhindert, wenn der Lagerkörper montiert ist. Entsprechende Mittel zur Festlegung der Segmente können auch an dem Gehäuse vorgesehen sein.

Des weiteren kann der Lagerkörper auch aus einem reibungsarmen Material bestehen, das eine ausreichende Elastizität aufweist, so daß der Lagerkörper im wesentlichen als geschlitztes Rohr ausgeführt ist und unter im wesentlichen über den Umfang des Lagerkörpers verteilter gleichmäßiger Deformation der Schlitz geöffnet und der Lagerkörper in radialer Richtung auf die Welle aufgebracht werden kann. Derartige Materialien können beispielsweise durch Kunststofflegierungen mit einerseits elastischen und andererseits im wesentlichen reibungsvermindernden Materialien gegeben sein.

Vorteilhafterweise verlaufen der Schlitz und der deformierbare Bereich des Lagerkörpers parallel zur Längsachse des Lagerkörpers. Des weiteren können der Schlitz und der deformierbare Bereich des Lagerkörpers einander auf dem Umfang des Lagerkörpers gegenüberliegend angeordnet sein, so daß der Lagerkörper aus zwei gleich großen und gegeneinander abwinkelbaren Halbschalen besteht. Der Schlitz kann jedoch auch wellen- oder wendelförmig ausgebildet sein.

Der Lagerkörper kann einzelne, segmentartig ausgebildete Gleitbereiche aufweisen, wobei die deformierbaren Bereiche als flexible, die Gleitbereiche miteinander verbindende Filmbrükken ausgebildet sind. Durch die Ausbildung des Lagerkörpers mit mehreren segmentartig ausgebildeten Gleitbereichen, die gesamthaft die Welle lagern, weist das Lager zugleich besonders gute Laufeigenschaften auf, da Materialausdehnungen des Lagerkörpers aufgrund von Feuchtigkeit oder Temperatur in Umfangsrichtung des Gleitlagers verteilt werden können. Zweckmäßigerweise sind bei einer derartigen Ausführungsform die die Gleitsegmente miteinander verbindenden Filmbrücken derart an den Kanten der Gleitsegmente angeformt, daß sowohl der innere als auch der äußere Umfang des Lagerkörpers Vertiefungen aufweist. Dadurch ist bei Ausdehnung der Gleitsegmente in Umfangsrichtung aufgrund von Temperatur- und/oder Feuchtigkeitsschwankungen genügend Spielraum für ein eventuelles Auffalten der flexiblen Filmbrücken vorhanden. Überdies können Lagerabrieb, Schmiermittel oder dergleichen in den der Welle zugewandten Vertiefungen aufgefangen werden. Vorzugsweise sind die segmentartigen Gleitbereiche als sich im wesentlichen axial in Richtung des Gleitlagers erstreckende Stege ausgeführt, sie können jedoch auch wendelförmig oder dergleichen ausgeführt sein.

Ausgehend von einem zylinderförmigen Lagerkörper in montiertem Zustand kann der Schlitz in einer der flexiblen Filmbrücken eingebracht sein. Zur Bildung des Schlitzes kann auch einer der filmartigen Bereiche ausgespart sein. Die Ausbildung des Schlitzes kann bereits während der Herstellung des Gleitlagers, beispielsweise durch entsprechende Gestaltung der Spritzgußform oder dergleichen, erfolgen, die Schlitze können auch nachträglich in den vorgefertigten Lagerkörper eingebracht werden.

Weist der Lagerkörper eine Mehrzahl von segmentartigen Gleitbereichen sowie diese miteinander verbindende deformierbare Bereiche wie beispielsweise flexible Filmbrücken auf, so kann sich der Lagerkörper der inneren Kontur des Gehäuses anpassen. Hierdurch muß der Lagerkörper nicht mehr, wie dies beispielsweise bei Lagerkörpern mit im wesentlichen starren Halbschalen der Fall ist, mit hoher Maßgenauigkeit der inneren und der äußeren Umfangsfläche hergestellt werden, um paßgenau in das Gehäuse eingesetzt werden zu können. An die Maßgenauigkeit des Lagerkörpers sind somit weniger hohe Anforderungen zu stellen, wie dies bei im wesentlichen starren Lagerkörpern der Fall ist. Dabei ist insbesondere dann, wenn der sich über die gesamte axiale Ausdehnung des Lagerkörpers erstreckende Schlitz auch im montierten Zustand des Lagerkörpers noch geöffnet ist, eine besonders gute Anpassung des Lagerkörpers an das Gehäuse ermöglicht und Änderungen der Abmessungen des Lagerkörpers aufgrund von Temperatur- und/oder Feuchtigkeitsschwankungen können auch über den geöffneten Schlitz ausgeglichen werden.

Vorteilhafterweise ist der Lagerkörper in dem Gehäuse in Bewegungsrichtung der Welle und/oder senkrecht dazu rastend festgelegt. Hierzu können an der radial außenliegenden Seite des Lagerkörpers entsprechende Rastmittel vorgesehen sein. Bei linear bewegter Welle stellt die Bewegung mit dazu senkrechter Komponente zum Beispiel eine rotatorische Bewegung dar.

Der Lagerkörper kann derart ausgeführt sein, daß er an seinem äußeren Umfang mindestens einen im wesentlichen radial vorstehenden Vorsprung aufweist, wobei an dem Gehäuse eine mit den Vorsprüngen korrespondierende Ausnehmung, insbesondere eine Umfangsnut, vorgesehen ist, in die der Vorsprung den Lagerkörper in axialer Richtung gegenüber dem Gehäuse festlegend eingeführt ist. Die Einführung des Lagerkörpers in das Gehäuse kann dabei beispielsweise unter radialer Deformation desselben in axialer Richtung erfolgen. Zur Einrastung der Rastmittel des Lagerkörpers mit den korrespondierenden Einrichtungen des Gehäuses kann der Lagerkörper so ausgebildet sein, daß sein äußerer Durchmesser in demontiertem Zustand gleich oder insbesondere auch größer bemessen ist als der Innendurchmesser des Gehäuses, so daß der Durchmesser des Lagerkörpers unter Ausübung eines radialen oder tangentialen Drucks verringert wird und der Lagerkörper derart federelastisch vorgespannt wird. Dies kann dadurch erleichtert werden, daß der Schlitz eine ausreichende Weite aufweist, so daß unter Schließen des Schlitzes der Außendurchmesser des Lagerkörpers ausreichend verringert wird. Der derart deformierte Lagerkörper kann dann in axialer Richtung in ein Gehäuse eingebracht werden, wobei er unter nachlassendem Druck zurückfedert und ohne oder vorteilhafterweise unter währender Vorspannung innenseitig an dem Gehäuse anliegt.

Das Gehäuse kann auch eine stirnseitig offene Nut aufweisen, in die ein an dem Lagerkörper nach außen stehender Vorsprung axial einschiebbar ist. Der Lagerkörper kann auch durch ein und dasselbe Rastmittel sowohl bei rotierender als auch bei axial relativ zu dem Gleitlager verschiebbar geführter Welle in dem Gehäuse festgelegt werden.

Die Festlegung des Lagerkörpers in axialer Richtung als auch in tangentialer Richtung, d. h. sowohl bei axial verschiebbarer als auch bei rotierender Welle, kann auch dergestalt erfolgen, daß das Gehäuse eine Durchgangsbohrung und der Lagerkörper eine fluchtend zu dieser positionierbare Ausnehmung aufweist und daß der Lagerkörper mittels eines in Durchgangsbohrung und Ausnehmung eingreifenden Befestigungsmittels verdreh- und/oder verschiebungssicher in dem Gehäuse festgelegt ist. Die Ausnehmung kann auch als sich zwischen stegartigen Gleitbereichen in axialer Richtung des Gleitlagers erstreckende Nut ausgeführt sein, durch die ein Filmscharnier gebildet wird.

Um sowohl den Lagerkörper als auch das Gehäuse mit nur geringem Aufwand demontieren zu können und so Reparaturarbeiten wesentlich zu vereinfachen, kann das Gehäuse mehrschalig, insbesondere zweischalig, ausgeführt sein, wobei Mittel zur Festlegung der Gehäuseschalen aneinander vorgesehen sind. Derartige Mittel können beispielsweise als korrespondierende Zapfen und Ausnehmungen ausgeführt sein. Es können auch entsprechende Rastmittel oder zusätzliche Befestigungsmittel vorgesehen sein, so daß das Gehäuse den Lagerkörper bereits ausreichend unterstützt. Die Mittel zur Festlegung der Gehäuseschalen aneinander können auch lediglich als Montagehilfen ausgebildet sein, wobei die auf das Gleitlager wirkenden Kräfte von den das Gleitlager unterstützenden Bauteilen aufgenommen werden können.

Die Erfindung ist im nachfolgenden beispielhaft beschrieben und anhand der Figuren erläutert. Es zeigen:
- Fig. 1: eine schematische Darstellung eines Lagerkörpers in einer ersten Ausführungsform mit segmentartigen Gleitbereichen im Querschnitt (oben) und in seitlicher Ansicht (unten),
- Fig. 2: eine schematische Darstellung eines in einem Gehäuse montierten Lagerkörpers nach Fig. 1 im Querschnitt (oben) und im Aufriß (unten),
- Fig. 3: eine schematische Darstellung eines Lagerkörpers in einer zweiten Ausführungsform im Querschnitt (oben) und in seitlicher Ansicht (unten) und
- Fig. 4: eine schematische Darstellung eines in einem Gehäuse montierten Lagerkörpers nach Fig. 3 im Querschnitt (oben) und im Aufriß (unten).

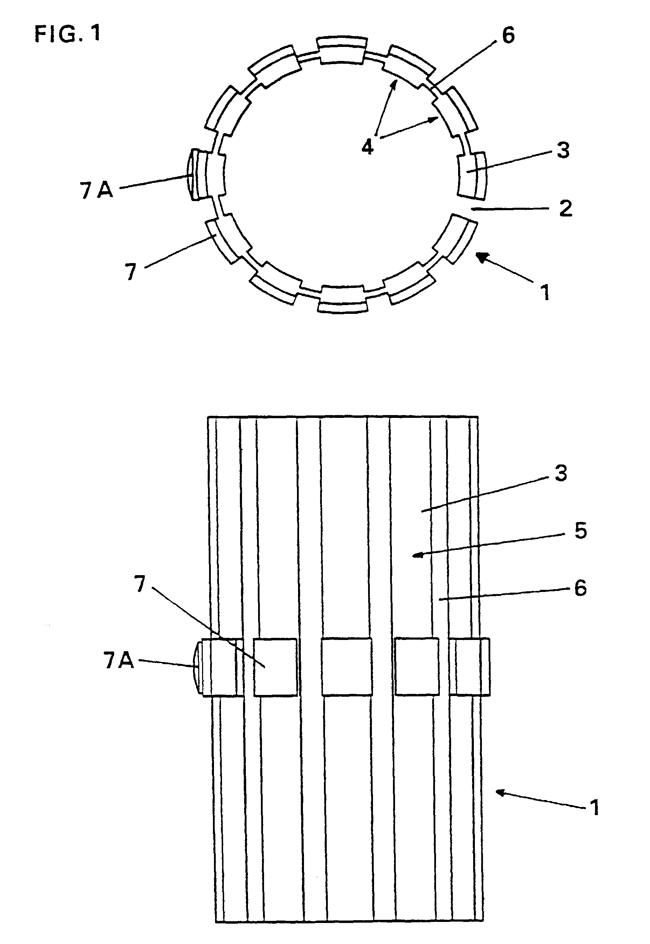

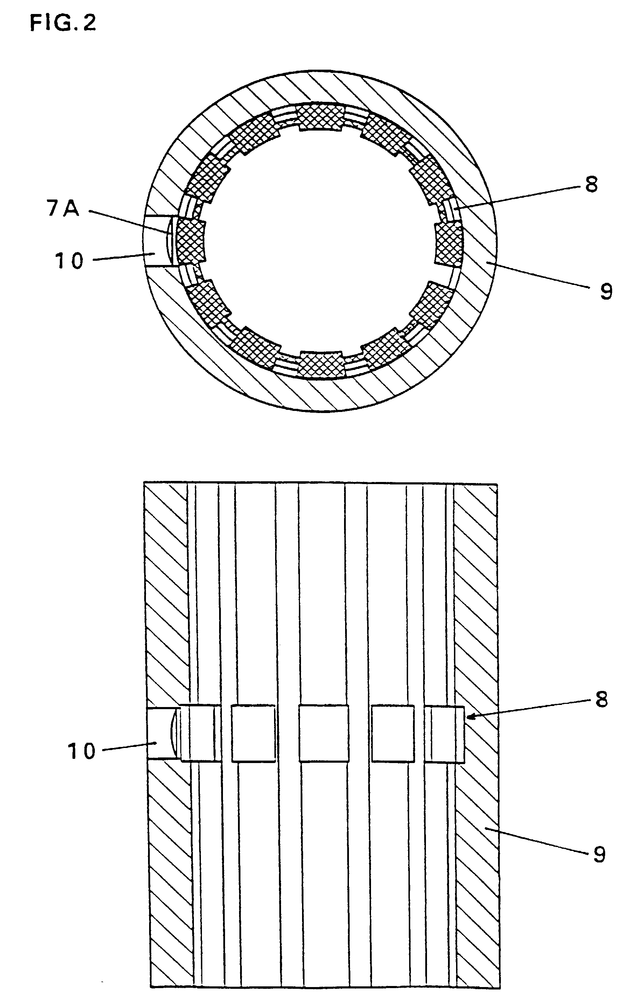

Wie in Fig. 1 gezeigt, weist der aus einem gleitarmen Kunststoff bestehende Lagerkörper 1 einen sich über dessen gesamte axiale Ausdehnung erstreckenden Schlitz 2 auf. Der Gleitbereich des Lagerkörpers ist in mehrere sich in axialer Richtung des Lagerkörpers erstreckende Stege 3 aufgeteilt, deren radial innenliegende Flächen 4 die Gleitfläche bilden, die mit der in dem Gleitlager geführten, nicht näher gezeigten Welle zur Anlage kommen. Die radial außenliegenden Flächen 5 der Stege 3 liegen im montierten Zustand des Lagerkörpers an der Innenwandung des Gehäuses an (siehe Fig. 2). Die Stege 3 sind über flexible Filmbrücken 6 miteinander verbunden, so daß unter Deformation der Filmbrücken der Schlitz 2 geöffnet oder geschlossen werden kann und so der Lagerkörper 1 in radialer Richtung auf eine Welle aufbringbar und von dieser entfernbar ist. Die Filmbrücken 6 können dabei so ausgebildet sein, daß der Außendurchmesser des Lagerkörpers 1 in demontiertem Zustand größer ist als der Innendurchmesser des Gehäuses, so daß der Lagerkörper 1 unter elastischer Vorspannung der Filmbrükken in das Gehäuse eingeführt werden kann und im montierten Zustand die Stege 3 mit geringer Vorspannung gegen die Innenwandung des Gehäuses anliegen.

Durch die Unterbrechung des Gleitbereichs in Stege 3 sowie durch die Anordnung des Schlitzes 2, der auch im montierten Zustand des Lagerkörpers 1 geöffnet ist, können Materialausdehnungen kompensiert werden.

Sowohl der Schlitz 2 als auch die Stege 3 sowie die deformierbaren Filmbrücken 6 sind parallel zur Längsachse des Lagerkörpers ausgerichtet. Der Schlitz 2 weist in montiertem Zustand des Lagerkörpers 1 eine Weite auf, die der Breite der Filmbrücken 6 entspricht.

Auf halber Länge der Stege 3 sind radial nach außen gerichtete, kastenförmige Vorsprünge 7 angeordnet, mittels derer der Lagerkörper 1 in axialer Richtung festlegbar ist, und ein Vorsprung 7a mit größerer radialer Ausdehnung, mittels dessen der Lagerkörper rotationsfest in dem Gehäuse festlegbar ist.

In Fig. 2 ist ein in einem Gehäuse angeordneter Lagerkörper nach Fig. 1 dargestellt. Die radial außenliegenden Vorsprünge 7 des Lagerkörpers 1 greifen in eine Umfangsnut 8 des Gehäuses 9 ein und sichern den Lagerkörper 1 gegen axiale Verschiebung. Aufgrund der elastischen Ausbildung der Filmbrücken 6 sowie der Bemessung des Außendurchmessers des Lagerkörpers 1 in demontiertem Zustand liegen die Außenflächen 5 der Stege 3 unter Vorspannung an der Innenwandung des Gehäuses 9 an, so daß die Vorsprünge 7 rastend von der Nut 8 aufgenommen sind. Um den Lagerkörper 1 drehfest in dem Gehäuse 9 anzuordnen, ist das Gehäuse 9 mit einer Durchgangsbohrung 10 versehen, in die der Vorsprung 7a eingreifen kann. Gleichzeitig wird hierdurch der Lagerkörper auch axial fixiert. Alternativ können beispielsweise auch die Vorsprünge 7 oder die Stege 3 mit Vertiefungen bzw. Ausnehmungen versehen sein, in die am Gehäuse angeordnete Vorsprünge eingreifen können. Die Durchgangsbohrung 10 kann auch als zum Lagerkörper 1 hin geöffnete Sackbohrung oder sich in axialer Richtung erstreckende Nut ausgeführt sein.

Der unter Öffnung des Schlitzes radial auf einer Welle aufgebrachte Lagerkörper kann unter Verengung des Schlitzes an die Welle angelegt werden, so daß das Gehäuse 9 in axialer Richtung entlang der Welle auf den Lagerkörper 1 geschoben wird, bis daß die Vorsprünge 7 rastend in die Nut 8 des Gehäuses eingreifen. Anschließend kann dann der Lagerkörper 1 im Gehäuse 9 gedreht werden, bis der Vorsprung 7a in die Durchgangsbohrung 10 einrastet. Dadurch, daß Rastmittel für eine verschiebungs- und verdrehsichere Anordnung des Lagerkörpers im Gehäuse vorgesehen sind, die nacheinander an dem Gehäuse eingerastet werden, ist eine stabile und einfach handhabbare Festlegung des Lagerkörpers in dem Gehäuse gegeben.

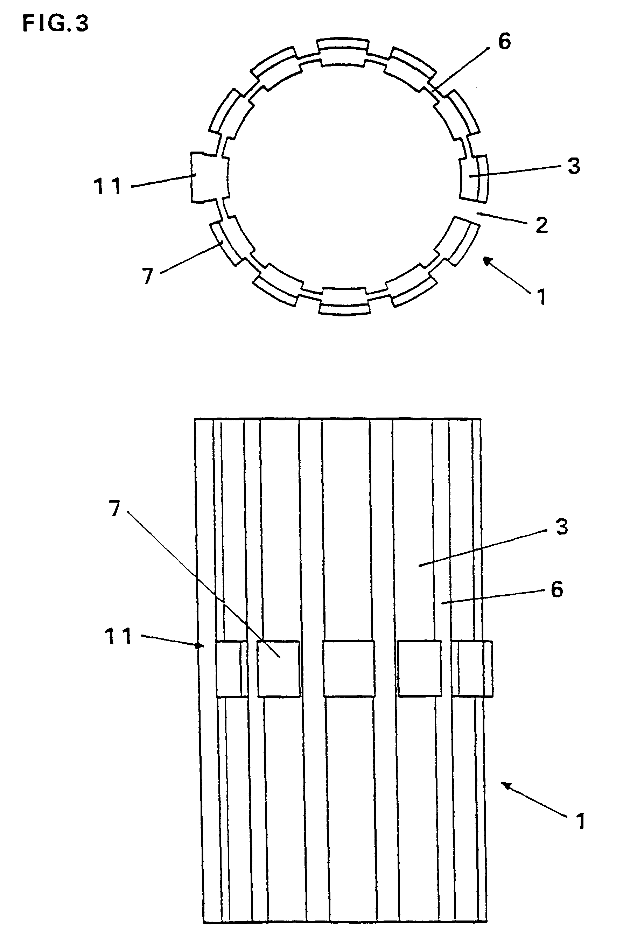

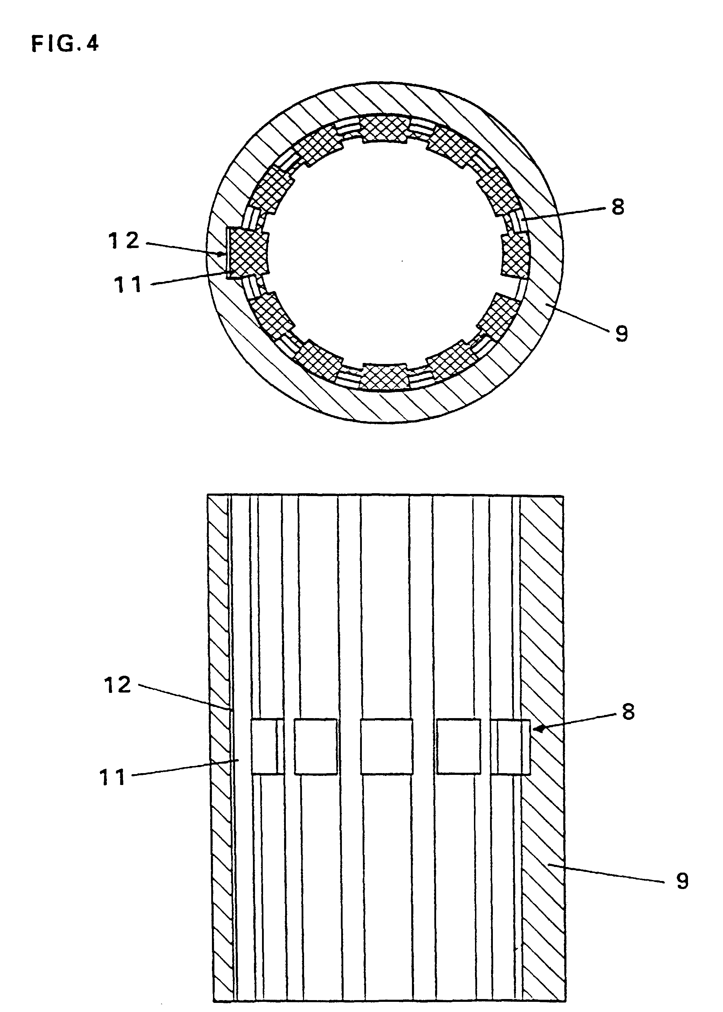

In der in Fig. 3 und 4 gezeigten weiteren Ausführungsform ist ein Lagerkörper 1 dargestellt, bei dem der den Lagerkörper 1 drehfest im Gehäuse 9 festlegende Vorsprung als Leiste 11 ausgebildet ist, die von einer Längsnut 12 des Gehäuses 1 aufgenommen werden kann und die sich über die gesamte Länge des Lagerkörpers 1 bzw. der Stege 3 erstreckt. Der Lagerkörper 1 wird unter Führung der Leiste 11 in der Nut 12 axial in das Gehäuse 1 eingeführt, bis daß die Vorsprünge 7 unter axialer Festlegung des Lagerkörpers 1 in dem Gehäuse 9 in die Umfangsnut 8 eingreifen. Lagerkörper 1 und Gehäuse 9 entsprechen im übrigen dem Ausführungsbeispiel nach Fig. 1, 2.

### Bezugszeichenliste

- 1: Lagerkörper
- 2: Schlitz
- 3: Steg
- 4: Innenfläche
- 5: Außenfläche
- 6: Filmbrücken
- 7: Vorsprünge
- 7a: Vorsprung
- 8: Nut
- 9: Gehäuse
- 10: Durchgangsbohrung
- 11: Leiste
- 12: Längsnut

## Patentansprüche

1. Gleitlager zur Lagerung von Wellen oder dergleichen mit einem Lagerkörper (1) aus Kunststoff und einem den Lagerkörper stützenden Gehäuse (9), wobei das Gleitlager die Welle im wesentlichen vollumfänglich umschließt und der Lagerkörper (1) einen sich über dessen gesamte axiale Ausdehnung erstreckenden Schlitz (2) und mindestens einen sich ebenfalls über die gesamte axiale Ausdehnung erstrekkenden deformierbaren Bereich (6) aufweist, der eine Öffnung des Schlitzes (2) ermöglicht, so daß der Lagerkörper (1) im wesentlichen in radialer Richtung zur Welle auf diese aufbringbar und von dieser entfernbar ist, und wobei der Lagerkörper (1) Mittel (7,7a,11) zur verdreh- und verschiebungssicheren Festlegung aufweist, **dadurch gekennzeichnet**, daß die Mittel (7A,11) zur verdrehsicheren und die Mittel (7) zur verschiebungssicheren Festlegung des Lagerkörpers so ausgebildet sind, daß zunächst eines derselben und nachfolgend hierzu das andere betätigbar ist.

2. Gleitlager nach Anspruch 1, **dadurch gekennzeichnet**, daß der Schlitz (2) und der deformierbare Bereich (6) parallel zur Längsachse des Lagerkörpers (1) verlaufen.

3. Gleitlager nach Anspruch 1 oder 2, d a d u r c h g ek e n n z e i c h n e t, daß der Lagerkörper (1) einzelne, segmentartig ausgebildete Gleitbereiche (3) aufweist und daß die deformierbaren Bereiche als flexible, die Gleitbereiche miteinander verbindende Filmbrücken (6) ausgebildet sind.

4. Gleitlager nach Anspruch 3, **dadurch gekennzeichnet**, daß ausgehend von einem zylinderförmigen Lagerkörper (1) der Schlitz (2) in einer der Filmbrücken (6) eingebracht ist oder daß eine der Filmbrücken (6) ausgespart ist.

5. Gleitlager nach einem der Ansprüche 1 bis 4, **dadurch gekennzeichnet**, daß der Lagerkörper (1) im montierten Zustand unter elastischer Vorspannung innenseitig an dem Gehäuse (2) anliegt.

6. Gleitlager nach einem der Ansprüche 1 bis 5, **dadurch gekennzeichnet**, daß die Mittel (7a, 11) zur verdrehsicheren und/oder die Mittel (7) zur verschiebungssicheren Festlegung des Lagerkörpers (1) als Rastmittel ausgeführt sind.

7. Gleitlager nach einem der Ansprüche 1 bis 6, **dadurch gekennzeichnet**, daß das Gehäuse (9) mindestens eine Durchgangsbohrung und der Lagerkörper (1) mindestens eine fluchtend zu dieser positionierbare Ausnehmung aufweist und daß der Lagerkörper (1) mittels eines in Durchgangsbohrung und Ausnehmung eingreifenden Befestigungsmittels verdreh- und/oder verschiebungssicher in dem Gehäuse (9) festgelegt ist.

8. Gleitlager nach einem der Ansprüche 1 bis 7, **dadurch gekennzeichnet**, daß die Mittel zur verschiebungssicheren Festlegung des Lagerkörpers als radial nach außen gerichtete Vorsprünge (7) ausgebildet sind und daß das Mittel zur verdrehsicheren Befestigung des Lagerkörpers als Vorsprung (7a) ausgebildet ist, welcher eine größere radiale Ausdehnung aufweist, als die zur verschiebungssicheren Festlegung dienenden Vorsprünge (7).

9. Gleitlager nach einem der Ansprüche 1 bis 7, **dadurch gekennzeichnet**, daß das Mittel zur verdrehsicheren Festlegung des Lagerkörpers als in eine stirnseitig offene Nut des Gehäuses einführbarer Vorsprung (11) ausgebildet ist und daß die Mittel zur verschiebungssicheren Festlegung des Lagerkörpers als sich radial nach außen gerichtete Vorsprünge (7) ausgebildet sind.

10. Gleitlager nach einem der Ansprüche 1 bis 9, **dadurch gekennzeichnet**, daß das Gehäuse (9) eine Umfangsnut (8) aufweist, in der die Mittel zur verschiebungssicheren Festlegung des Lagerkörpers (7) festlegbar sind.

11. Gleitlager nach einem der Ansprüche 1 bis 10, **dadurch gekennzeichnet**, daß das Gehäuse (9) mehrschalig, insbesondere zweischalig, ausgeführt ist und Mittel zur Festlegung der Gehäuseschalen aneinander vorgesehen sind.

## Claims

1. Sliding bearing for mounting shafts and the like, with a bearing body (1) made of plastic and a housing (9) supporting the bearing body, where the sliding bearing essentially encloses the full circumference of the shaft, the bearing body (1) displays a slit (2) extending along the entire length of its axis and at least one deformable zone (film bridge 6), likewise extending along the entire length of the axis, which allows the slit (2) to be opened so that the bearing body (1) can essentially be fitted to the shaft, and also removed from the shaft, in the radial direction, the bearing body (1) is provided with securing means (7,7a,11) for axially and rotationally securing the bearing body, **characterised in that** the securing means (7a,11) for rotationally securing and the securing means (7) for axially securing the bearing body (1) are designed enabling to operate in a first step one of the both securing means (7,7a,11) and in a second step the other one of the securing means (7,7a,11).

2. Sliding bearing according to Claim 1, **characterised in that** the slit (2) and the deformable zone (6) run parallel to the longitudinal axis of the bearing body (1).

3. Sliding bearing according to Claim 1 or 2, **characterised in that** the bearing body (1) displays individual, segment-like sliding zones (3) and that the deformable zones are designed as flexible film bridges (6) joining the sliding zones (3) to one another.

4. Sliding bearing according to Claim 3, **characterised in that**, based on a cylindrical bearing body (1), the slit (2) is located in one of the film bridges (6) or that one of the film bridges (6) is omitted.

5. Sliding bearing according to one of the Claims 1 to 4, **characterised in that** the bearing body (1) in the mounted state is positioned against the inside of the housing (2) with continuing pretension.

6. Sliding bearing according to one of the Claims 1 to 5, **characterised in that** the securing means (7a,11) for securing the bearing body (1) in non-displaceable and/or non-rotating fashion are designed as locking means.

7. Sliding bearing according to one of the Claims 1 to 6, **characterised in that** the housing (9) displays at least one through-hole and the bearing body (1) displays at least one recess which can be aligned with it, and that the bearing body (1) is secured in the housing (9) in non-rotating and/or non-displaceable fashion by means of a fastening element which fits into the through-hole and the recess.

8. Sliding bearing according to one of the Claims 1 to 7, **characterised in that** the means for securing the bearing body in a non-displaceable fashion are designed as radial outwardly directed projections (7) and the means for securing the bearing body in a non-rotating fashion are designed as projections (7a) with a greater radial length than that of the first ones.

9. Sliding bearing according to one of the Claims 1 to 7, **characterised in that** the means for securing the bearing body in a non-rotating fashion are designed as projections (11) which are insertable into a groove open to its face end the housing is provided with and the means for securing the bearing body in a non-displaceable fashion are designed as radial outwardly directed projections (7).

10. Sliding bearing according to one of the Claims 1 to 9, **characterised in that** the housing (9) is provided with a circumferential groove (8) which is adopted to receive the securing means (7) for securing the bearing body in a non-displaceable fashion.

11. Sliding bearing according to any one of the Claims 1 to 10, **characterised in that** the housing (9) is designed with several shells and securing means are provided for securing the housing shells to one another.

## Revendications

1. Palier coulissant pour le montage d'arbres ou similaires, comprenant un corps de palier (1) en matière plastique et un boîtier (9) qui soutient le corps de palier, ledit palier coulissant enfermant l'arbre sensiblement totalement sur sa périphérie, et le corps de palier (1) comportant une fente (2) qui s'étend sur la totalité de son extension axiale, et au moins une région déformable (6) qui s'étend également sur la totalité de son extension axiale et qui permet une ouverture de la fente (2), de sorte que le corps de palier (1) peut être monté sur l'arbre, et enlevé de celui-ci, sensiblement en direction radiale, et dans lequel le corps de palier (1) comporte des moyens (7, 7a, 11) pour la fixation bloquée vis-à-vis de la rotation et de la translation, caractérisé en ce que lesdits moyens (7A, 11) pour la fixation bloquée vis-à-vis de la rotation, et lesdits moyens (7) pour la fixation bloquée vis-à-vis de la translation du corps de palier sont réalisés de telle sorte que l'un d'eux est tout d'abord susceptible d'être actionné, et que l'autre est susceptible d'être actionné ensuite.

2. Palier coulissant selon la revendication 1, caractérisé en ce que la fente (2) et la région déformable (6) s'étendent parallèlement à l'axe longitudinal du corps de palier (1).

3. Palier coulissant selon l'une ou l'autre des revendications 1 et 2, caractérisé en ce que le corps de palier (1) comporte des zones de coulissement individuelles (3) réalisées à la manière de segments, et en ce que les zones déformables sont réalisées sous forme de ponts analogue à des films flexibles (6) qui relient les zones de coulissement les unes avec les autres.

4. Palier coulissant selon la revendication 3, caractérisé en ce que, partant d'un corps de palier de forme cylindrique (1), la fente (2) est pratiquée dans l'un des ponts en forme de film (6), ou bien en ce que l'un des ponts en forme de film (6) est entaillé.

5. Palier coulissant selon l'une des revendications 1 à 4, caractérisé en ce que le corps de palier (1) s'applique sous précontrainte élastique à l'intérieur contre le boîtier (2) dans l'état monté.

6. Palier coulissant selon l'une des revendications 1 à 5, caractérisé en ce que les moyens (7a, 11) pour la fixation bloquée en rotation et/ou les moyens (7) pour la fixation bloquée en translation du corps de palier (1) sont réalisés sous forme de moyens à enclenchement.

7. Palier coulissant selon l'une des revendications 1 à 6, caractérisé en ce que le boîtier (9) comprend au moins un perçage traversant et le corps de palier (1) comprend au moins un évidement susceptible d'être positionné en alignement vis-à-vis de ce perçage, et en ce que le corps de palier (1) est fixé dans le boîtier (9) de manière bloquée vis-à-vis de la rotation et/ou de la translation au moyen d'un organe de fixation qui s'engage dans le perçage traversant et dans l'évidement.

8. Palier coulissant selon l'une des revendications 1 à 7, caractérisé en ce que les moyens pour la fixation bloquée en translation du corps de palier sont réalisés sous forme de saillies dirigés radialement vers l'extérieur (7), et en ce que les moyens pour la fixation bloquée en rotation du corps de palier sont réalisés sur forme d'une saillie (7a) qui présente une extension radiale plus importante que les saillies servant à la fixation bloquée en translation (7).

9. Palier coulissant selon l'une des revendications 1 à 7, caractérisé en ce que les moyens pour la fixation bloquée en rotation du corps de palier sont réalisés sous forme d'une saillie (11) susceptible d'être introduite dans une gorge du boîtier ouverte du côté frontal, et en ce que les moyens pour la fixation bloquée en translation du corps de palier sont réalisés sous forme de saillies (7) dirigées radialement vers l'extérieur.

10. Palier coulissant selon l'une des revendications 1 à 9, caractérisé en ce que le boîtier (9) comporte une gorge périphérique (8) dans laquelle les moyens pour la fixation bloquée en translation du corps de palier (7) sont susceptibles d'être fixés.

11. Palier coulissant selon l'une des revendications 1 à 10, caractérisé en ce que le boîtier (9) est réalisé à plusieurs coques, en particulier à deux coques, et en ce qu'il est prévu des moyens pour fixer les coques de boîtier l'une à l'autre.
